# EUROPEAN PATENT APPLICATION

(11) **EP 1 868 067 A1**
(43) Date of publication of application: **19.12.2007**
(21) Application number: 06715518.4
(22) Date of filing: 10.03.2006
(51) Int. Cl.: G06F 3/033

(54) **INPUT DEVICE FOR COMPUTER**

(30) Priority: 16.03.2005 JP 2005074638
(71) Applicant: Okabe, Tairoku, Yokohama-shi, Kanagawa 232-0063 (JP)
(72) Inventor: Okabe, Tairoku, Yokohama-shi, Kanagawa 232-0063 (JP)
(74) Representative: Pätzold, Herbert
(86) International application number: PCT/JP2006/304698
(87) International publication number: WO 2006/098228

(57) **Abstract**

[Problems] An input device is provided used as both a hold-gripping trackball and a pen-gripping mouse.

[Means for Solving] An input device for electronic computer comprising a bar-shaped case (2) which can be gripped by using fingers except a thumb, a ball, which is positioned at a longitudinal end of the case (2) and a half or less of which is outward exposed, having on its surface a pattern optically observable and rotated by the thumb when the case is gripped, a ball supporting means (4) which rotatably supports the ball in all directions with respect to the case (2), and can be moved in an axial direction with respect to the case (2), an optical ball rotation detecting means (17) which moves integrally with the ball supporting means (4) in the axial direction of the case (2), and detects a movement of the pattern on the ball surface at an axial middle point of the ball supporting means (4), thereby detecting a rotating direction and a rotating amount of the ball (3); a position indicating projection (17) which projects toward a side of the case to clarify a base position of an axial rotation direction of the case; and a ball movement detecting switch (S) which is operated by an axial direction movement of the ball (3), the ball supporting means (4) and the optical ball rotation detecting means (17) upon pressing of the ball toward the inner axial direction of the case (2).

## Description

### TECHNICAL FIELD

The present invention relates to an input device for electronic calculator controlling a pointer (a mark such as an arrow or a hand) in a graphical user interface (GUI).

### BACKGROUND OF INVENTION

Currently, a computer becomes more compact and less expensive, and anyone can desirably operate the computer without special skill similar to the operation of home electric appliances.

A man machine interface is desired which is verified depending on the personality of an operator in a popularized computer.

The GUI has been developed in accordance with such a purpose. A mouse has been developed as an input device for an electronic computer which controls a pointer in the GUI, and is currently used as a standard man machine interface. In addition to the mouse, a trackball and a flat pad are included.

A first object of the present invention is to provide a diversified man machine interface in accordance with personality of an operator. In this man machine interface, the operator of the electronic apparatus such as a computer rotates, with his or her selected usability, a ball in accordance with the personal aptitude while electrically detecting the rotational direction and rotation degree, thereby moving the coordinate point of the pointer of the GUI of the electronic apparatus and providing an order or an instruction to the coordinate point.

A conventional pointing device using the ball includes the above mouse system and the trackball system.

The both systems are related such that the vertical relations are reversed with each other with respect to the usability of the ball.
Then, the usability of the both systems as an operation device is summarized as follows.

The standard usability of the mouse system is as follows. After the device placed on a plane such as a desk is seizingly gripped downward with a palm such that the device is moved relative to the plane, the device is slidably moved along the plane by using the palm and the brachial region so that the ball mounted on the bottom surface of the device is rotated in contact with the plane (it is a well known mouse structure so that no Patent Publication is presented).

For the convenience of illustrating situations of gripping the device (case) with a hand (palm), terms are referred to as follows. The hand or the palm is referred to a section from a wrist to ends of fingers (according to KOJIEN, a Japanese language dictionary), and the hand or the palm consists of five finger from first to fifth, and the inner section of a thenar between the wrist and the respective fingers (according to KOJIEN). While the thenar refers to the entire surface of the palm, the thenar refers to a section of the palm excluding the fingers.

In the thenar, a swelled section at the bottom of a thumb, a first finger, is referred to as thenar eminence, and the respective swelled sections between the bottoms of the rest of fingers, or from a fore finger to a little finger, that is, second to fifth fingers are referred to as interdigital areas.

The secure holding of the device such as a case is referred to as gripping (according to KOJIEN). Among grippings, gripping by using the ends of fingers (finger pulp having fingerprint) from the second to fifth fingers and the thenar (especially interdigital areas) is referred to as hold-gripping. Gripping of the device by using the thumb and the remaining four fingers almost uniformly is referred to as seize-gripping. Sandwich gripping of the device by using the thumb and the forefinger (either of middle finger, annular finger and little finger is possible) is referred to as clip-gripping. In the clip-gripping, the three-directional holding of the device by using the thumb, the forefinger and the middle finger is referred to as pen-gripping, and gripping of the device by using the adjacent two fingers is referred to as nip-gripping.

A pen-gripping system (Patent Publications 1 to 3) is known as another usability of the mouse system. In this system, an instrument-shaped case equipped with a ball at the top end thereof is pen-gripped such that the ball in contact with the rigid surface is rotated by moving the hand in the manner of wring letters.

Although a pen-shaped case used in a mouse and using an optical encoder is known, no Patent Publication is presented because of no use of the ball.

On the other hand, the standard usability of the trackball system is as follows. A ball is rotatably equipped on the top surface of a fixed device (case), and the ball is rotated by using a thenar or an finger end (no Patent Publication is presented because of the well known trackball structure).

A case-gripping system (Patent Publications 4 to 7) is known as another usability of the trackball system. In this system, after a ball is rotatably supported in a case which can be gripped with a hand, the ball is rotated while the case is gripped by either of hold-, seize- or clip-gripping with the fingers other than the thumb.

On the other hand, examples of switching operations by pressing a ball in the trackball system are disclosed in Patent Publications 8 and 9.

A handy input device is disclosed in Patent Publication 9 in which a mouse functions also as a trackball because they are in reverse relation with respect to the usage of the ball.

A ball having an irregular pattern on its surface is disclosed in Patent Publication 10.

A two-stage clicking switch is disclosed in Patent Publication 11.

Patent Publication 1: Japanese Patent Laid Open Gazette No.5-307437
Patent Publication 2: Japanese Patent Laid Open Gazette No.2000-99261
Patent Publication 3: Japanese Patent Laid Open Gazette No.5-173706
Patent Publication 4: Japanese Patent Laid Open Gazette No.6-35601
Patent Publication 5: Japanese Patent Laid Open Gazette No.11-305937
Patent Publication 6: Japanese Patent Laid Open Gazette No.2001-331237
Patent Publication 7: Japanese Patent Laid Open Gazette No.2002-108558
Patent Publication 8: Japanese Patent Laid Open Gazette No.6-89139
Patent Publication 9: Japanese Patent Laid Open Gazette No.2000-29629
Patent Publication 10: Japanese Patent Laid Open Gazette No.6-195168
Patent Publication 11: Japanese Patent Laid Open Gazette No.7-234757

### DISCLOSURE OF INVENTION

### PROBLEMS TO BE SOLVED BY INVENTION

The man machine interface for utilizing the computer usually depends on physical abilities of an operator. Even an easily operatable device such as a mouse cannot be sometimes operated in accordance with the operator's will.

Especially, the operation of the mouse includes the moving operation of the mouse main body for moving the pointer and the clicking operation for signaling an order to the position the pointer points. The clicking operation includes a left click and a right click (in the following, the left and right clicks will be described in accordance with examples of the GUI in Window (trademark) which is a standard operation system (OS) of Microsoft Corporation.

The operation of the mouse main body requires the four directional movement of a hand such that the mouse slides on the rigid surface such as a desk surface, and the right and left clicks require the selective downward pressing of the two push-button switches at the front end of the mouse case by using the forefinger and the middle finger while the hand seize-grips the mouse

In this case, the thumb presses one side surface of the mouse case, and the annular finger and the little finger other than the forefinger and the middle finger press the opposite side surface so that the thumb, and the annular finger and the little finger forming the opposite positions function to sandwich the case therebetween. Accordingly, the hand substantially clip-grips the case.
Especially, when the mouse main body is operated while it is lifted above the desk, the situation of the clip-gripping remarkably appears.

The hand in this stage is in the shape of the seize-gripping in which the five fingers uniformly open, and the mouse is seized and operated by the hand of this shape. The shape of the hand changes from the natural seize-gripping to the shape in which the forefinger and the middle finger are slightly lifted.

It is natural that front ends of the second to fifth fingers other than the thumb are aligned when no force is applied to the respective fingers of the hand in the seize-gripping situation.

An operator with less skill to the mouse or a beginner may turn on a switch with the forefinger and the middle finger when he or she only seize-grips the mouse in the ordinary situation.

Even when the seize-gripping using the thumb and the middle finger or the little finger can be achieved in a little accustomed situation after the above stage, the force of the seize-gripping with the thumb and the middle finger or the little finger is increased to unnecessarily turn on the switch because the shape of the hand is the same as that of the seize-gripping so that the sense of the seize-gripping is transmitted to the forefinger and the middle finger, thereby applying the force of the seize-gripping to the forefinger and the middle finger by itself.

The degree of the skill of operating the mouse does not progress for an aged person.
Especially, it is conventionally pointed out that the operation of the double click of the left switch becomes difficult with age, and the progress of its training is slow. The invention of Patent Publication 11 has been made for overcoming the problem.

The skilful control of the mouse requires the exercise capability of controlling the position of the mouse case as well as the operation of the right and left switches. The exercise capability includes, in addition to the exercise control capability of the hand itself, the exercise capabilities of the wrist and of the brachial muscle. The delicate control of the pointer requires the delicate position control achieved by these exercise capabilities.

The large-screen monitor used in the current universal computers has high resolution so that the number of pixels on the control screen in relation with the GUI is increased. Accordingly, in order to swiftly move the pointer in the four directions, the ratio between the moving distance of the mouse and the output pulse of an encoder (usually referred to as resolution, and its unit is DPI) is required to be high. In the higher resolution, the pointer is sensitive to the slight move of the pointer so that the higher controlling capability of the hand or the skillfulness is demanded.

On the other hand, the inborn and acquired individual difference exists in the individual exercise capability in using the pointing device. An individual difference is generated in shapes of hands or fingers, postures and exercise directions which hinder the movement of the mouse case and the rotation of the ball among aged persons depending on their personal occupation histories or medical histories.

Especially for an aged person who acquires the disability in the dominant hand, it is significantly difficult to operate a conventional mouse, which is not easily operated with a dominant hand, with a non-dominant hand so that the aged person is forced to give up the use of a computer.
Especially, the disability of the forefinger and the middle finger of the dominant hand makes impossible the operation of the mouse.

Even if the usability of an application software is improved to reduce the digital divide in the coming aging society, the gap of the digital divide is not reduced when a problem remains in the man-machine interface which is a fundamental of utilizing a computer.

In the genesis of a computer, an operator is desired to fit the man-machine interface by elevating the level of skill by means of exercise. A variety of the man-machine interfaces corresponding to the versatile individual differences must be provided so that a certain man-machine interface is selected among them which is suited to each individual.

Accordingly, an object of the present invention is to provide a man-machine interface with versatility in which the usability of the ball in the conventional mouse and trackball and the usability of the case are combined and the mouse and the trackball can be selectively used so that each individual freely selects the optimum man-machine interface which is appropriate for the exercise characteristics and the capabilities of an operator.

The aged person has an overwhelming experience of using writing instruments so that the man-machine interface is desired in which the case is gripped, as if holding a pen holder, to conduct the operation of pen-gripping.

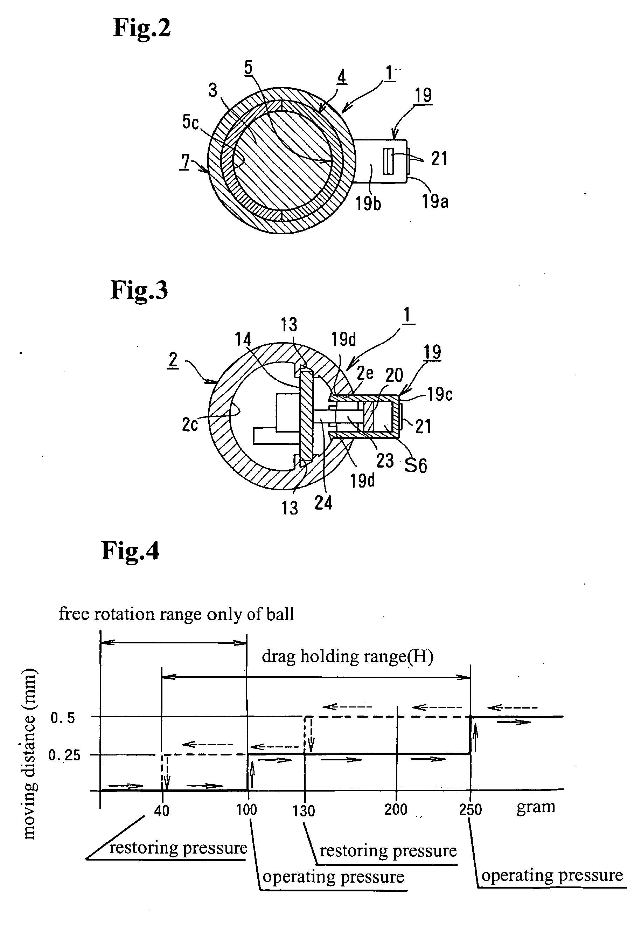

Patent Publication 1 discloses a mouse including a ball with a surface having an irregular pattern and a pen-holder type case (Fig.4). Patent Publications 2 and 3 disclose a pen-holder type mouse.
The balls mounted on the front ends of the pen-holder type cases are rotated in contact with appropriate smooth surfaces in both of the Publications.

In the pen-holder type mouse described in Patent Publication 1, a writing pressure can be detected by a pressure sensor. However, a switch for left click is separately mounted and the pressure sensor does not operate as a left click switch.

The problems in the conventional standard mouse are as follows. Since the weight of a ball is utilized in a mouse equipped with a mechanical encoder, a plane in relative positional relation with a case must be a nearly horizontal plane. Further, even in a mouse equipped with an optical encoder, a plane in relative positional relation with a case constitutes an essential element.

The necessity of securing the plane in relative relation with the mouse main body remains a problem in connection with the man-machine interface when a computer becomes to be used in all circumstances.

Recently, the computer becomes compact and a face-mounted monitor (overhead monitor) which is wearable on a body is available. The wearable computer is supposed to be used by an operator in a peculiar circumstance.

One purpose of the wearable computer is to refer to a manual for the working by using the computer a worker wears when, for example, the worker performs in a special working conditions such as in a mobile object in which a peculiar acceleration is generated, in a state the worker is hung down on a building outer wall or on a rockface, or in a state the worker is hung down upward under a ceiling.

The man-machine interface is desired suitable for a sick person keeping to one's bed because the usability of the standard mouse is worse for the sick person lying on the bed upward.

When an operator has an disadvantage in his physical abilities, his intended control on a pointing device using the above standard mouse may not be sufficiently reflected on the operation of the computer depending on the position and the degree of the above disadvantage.

In the pen holder type mice described in Patent Publications 1 to 3, while the problem of the ball weight is overcome, the plane on which the ball rotates is still required due to the mouse-type.

The trackball system requires no plane for the ball rotation.

In the conventional case-fixed type standard trackball system, the case rotatably supporting the ball is required to be fixed to a pertinent part while sufficiently satisfying the condition of action and response between an operating hand and an operating force. Accordingly, the position of the operator is restricted by the position of the case which operates the ball so that the case is difficult to be used.

In order to resolve this problem, Patent Publications 4 to 7 disclose trackballs in which a ball is rotated with a thumb while the case of the trackball is gripped with a hand.

Patent Publication 4 discloses a mouse (substantially a trackball) in which a ball is rotated with a thumb while a case is hold-gripped with a hand. Patent Publication 5 discloses a trackball in which the ball is rotated with a thumb and a left click switch is operated with a forefinger which grips a case while the case is hold-gripped with a forefinger and the thenar eminence. Patent Publication 5 discloses a trackball in which a ball is rotated with a thumb while a handle is hold-gripped with the fingers except for the thumb, and right and left click switches are operated with the thumb. Patent Publication 7 discloses a trackball at the top end of a cylindrical case rotated with a thumb while the case is hold-gripped, and right and left click switches positioned on the side surface of the case is pressed and operated with a forefinger and a middle finger which grip the case.

Patent Publication 4 discloses no switch for clicking action.

When the fingers other than a thumb operate a switch as described in Patent Publications 5 and 7, the second to fifth fingers can exert the forces only to the gripped direction. In order to receive the forces in the gripped direction to generate a reactive force for operating a switch, the thenar eminence at the bottom of the thumb which is positioned opposite to the gripped force must be firmly attached to a case. However, when the thenar eminence at the bottom of the thumb is attached to the case, the degree of freedom of the thumb decreases so that the rotation of the ball becomes rather difficult.

When the direction in which the force of gripping the case force is generated and the direction of driving the switch are the same as each other as in Patent Publications 5 and 7, the gripping of the case conflicts with the operation of the switch. The gripping of the switch is unstable and required the skill, and the selecting action by using the juxtaposed forefinger and middle finger also requires the skill.

Especially, the frequency of the left click in the GUI is higher, and the double clicking requires the quick response.

When the means of switching operation corresponding to the left click requiring the quick response with the fingers except for those gripping the case is considered, a force can be applied which presses in the axial direction other than the direction of the ball rotation.

Patent Publications 8 and 9 disclose a trackball in which a switch is operated by pressing the ball.

Patent Publication 8 discloses the trackball in which the switch positioned below the ball is operated by pressing the ball mounted on a rotary encoder equipped with a spring.

Patent Publication 9 discloses the standard mouse-trackball which is configured by reversing the standard mouse in which the switch positioned below the ball on a separate encoder is operated by pressing the ball downward.

In both of Patent Publications 8 and 9, a drawback exists that the encoder operates to change the coordinate point of the pointer during the switching stroke for operating the lower switch because the ball on the encoder is downward pressed.

A similar drawback remains when the encoder is replaced with an optical one in case that the relative position between the ball and the encoder is changed during the switching operation.

The respective encoders for the mouse and the trackball are necessary in the device of Patent Publication 9 though the standard mouse and the trackball can be combined. Accordingly, in addition that the device is expensive, its reliability is lowered due to increase of the number of elements and its compactness can be hardly achieved.

While a ball having an irregular pattern on its surface is required to realize the trackball disclosed in Patent Publication 1, one example thereof is disclosed in Patent Publication 10.

A two-stage switch is disclosed in Patent Publication 11 as an example multiply utilizing the force of pressing the ball in the axial direction. However, this example is not used in a situation where a first stage is performed and a second stage is not performed, and does not provide versatile utilization of the switch because the continuous operation is enabled by making a slight time difference between the first and the second stages to generate a double click signal.

The present invention has been made to overcome the above conventional drawbacks. In the invention, a hold-gripping trackball and a pen-gripping mouse are combined as one input device and in both of the hold-gripping and the pen-gripping, a switch for left click is operated with a force pressing the ball in an axial direction which is different from that a force exerted to fingers gripping a case.

Further, the force of pressing the ball in the axial direction for operating the switch can be easily adjusted when the ball is pressed with a thumb and also when the ball is pressed as if by applying pressure on the pen, thereby enabling the multiple utilization to provide versatility.
An object of the present invention is to provide an input device for electronic calculator with versatile usability in which an operator can freely select one of the usabilities which is suited to the physical abilities of the operator.

In both of the situations using the hold-gripping trackball and the pen-gripping mouse, a plurality of switches can be operated with the fingers other than those gripping the case. The input device of the present invention has compactness, multi functions, versatility, easy operation, and can be operated without skill. Especially, the dependence on the dominant hand is scarce in the hold-gripping. The input device for electronic calculator of the present invention can be used in any circumstance.

### MEANS FOR OVERCOMING PROBLEMS

The above drawbacks of the present invention are overcome as follows.

(1) An input device for an electronic computer comprising a bar-shaped case which can be gripped by using fingers except a thumb, a ball, which is positioned at a longitudinal end of the case and a half or less of which is outward exposed, having on its surface a pattern optically observable and rotated by the thumb when the case is gripped by the fingers except the thumb, a ball supporting means which rotatably supports the ball in all directions with respect to the case, and can be moved in an axial direction with respect to the case, an optical ball rotation detecting means which moves integrally with the ball supporting means in the axial direction of the case, and detects a movement of the pattern on the ball surface at an axial middle point of the ball supporting means, thereby detecting a rotating direction and a rotating amount of the ball; a position indicating projection which projects toward a side of the case in a longitudinal direction to clarify a base position of an axial rotation direction of the case; and a ball movement detecting switch which is operated by an axial direction movement of the ball, the ball supporting means and the optical ball rotation detecting means upon pressing of the ball toward the inner axial direction of the case.

(2) The bar-shaped case is circular columnar in the item (1).

(3) The bar-shaped case is polygonal columnar in the item (2).

(4) The polygonal column is hexagonal column in the item (3).

(5) The bar-shaped case is a pyramidal structure having a different thickness at both ends along a longitudinal direction in any one of the items (1) to (4).

(6) The ball is a natural stone having an optically irregular pattern on its surface in any one of the items (1) to (5).

(7) The ball is a glass material having an optically non-uniform surface layer in any one of the items (1) to (5).

(8) The ball is synthetic resin having a surface layer in which at least one of concentration, hue and chroma saturation is different in any one of the items (1) to (5).

(9) The ball is mounted at an end along a longitudinal direction such that an axial line of the case in a longitudinal direction and an axial line of the ball supporting means are slightly incongruous in any one of the items (1) to (8).

(10) The ball supporting means accommodates the ball in a cylindrical member having an inner diameter slightly larger than a diameter of the ball, and a lower friction projection for preventing a movement of the ball along an axial direction is formed at a vicinity of both side openings sandwiching the ball along the axial direction in any one of the items (1) to (9).

(11) Both of or at least one end of the lower friction projections is separated from the cylindrical member accommodating the ball in the item (10).

(12) Both ends of the lower friction projection are integrally united with the cylindrical member accommodating the ball in the item (10).

(13) The lower friction projection is integrally united with the cylindrical member accommodating the ball by making elastic the projection at the end where the ball surface is exposed in the item (10).

(14) The ball supporting means is divided into a plurality of sections along a radial direction with respect to an axial line in the item (10).

(15) The ball rotation detecting means includes a changeover means for reversing a rotating direction of the ball to be detected in any one of the items (1) to (14).

(16) The changeover means is a changeover switch equipped in the case in the item (15).

(17) The changeover means is an automatic changeover switch which automatically operates depending on configuration of the switch in the item (15).

(18) The changeover means is a software program which is either an operation system or a driver built-in in the operation system in the item (15).

(19) The position indicating projection forms a fin-like shape which includes a downward slanted first plane extending from the ball side upper end of the case and a second plane downward extending from the lower end of the first plane with gradual decrease of an amount of the projection, both of the planes projecting outward from the case and extending along the longitudinal direction of the case in any one of the items (1) to (18).

(20) The position indicating projection includes one or more built-in switches in any one of the items (1) to (19).

(21) The ball movement detecting switch is a mechanical contact opening and closing snap switch in which its operational position is adjusted by pressure of a spring in any one of the items (1) to (20).

(22) The ball movement detecting switch is an electronic switch which electronically detects the operational position of the switch by means of a pressure detecting sensor in any one of the items (1) to (20).

(23) The ball movement detecting switch is a plurality of switches each operating in plural moving amounts in any one of the items (1) to (20).

### EFFECTS OF INVENTION

In accordance with the present invention, the following effects can be realized.

The input device in accordance with the invention of claim 1 can be used as either of the hold-gripping trackball or the pen-holding mouse, and increases the versatility of the man-machine interface as the input device for the electronic calculator. Further, the pointer of the GUI can be operated in accordance with an operator's intension without physical training and skillfulness, without significantly reducing the operation efficiency and regardless of the operator's posture even if a dominant hand is injured or a non-dominant hand is used.
The operation of moving the ball and the operation of proving an order are separately conducted by rotating the ball and pressing the ball, respectively. These operations on the ball can be conducted without being confused and the fingers and the contact plane are maintained in contact with the ball to be operated. Accordingly, the required level of learning can be obtained in a relatively short period of time without training and practice because the operation sites are definitely separated in accordance with the operator's consciousness and the operations can be performed by using separate muscles belonging to a hand or an arm.
When the device is used as the hold-gripping track ball-type, the fingers holding the device and the finger operating the operating site are clearly separated. Only a thumb is used for the control of only the rotation and the pressing of the ball but also all the other switches because the thumb is strong, has a higher degree of freedom and a higher sensitivity on its tip. No confusion nor panic in the operation is generated even though the swift operation cannot be desired.
The respective four hold-gripping fingers other than the thumb have the functions dedicated for the hold-gripping so that even one finger among the four fingers can sufficiently hold-grip the device. In this hold-gripping, the four fingers other than the thumb never operate the switch so that, if one of the four fingers is not damaged, the device can be gripped without any problem to enable the control of the pointer.
No difficulty exists for operating the device as the pen-gripping manner because a person accepting the ordinal education has a higher physical capability of using writing instruments.
The above person accepting the ordinal education is well trained also in capabilities of controlling brush stroke and pen pressure for writing ordinary letters so that he or she acquires proficiency in the operation for a short period of time by directly controlling the pointer.
As described above, even the person who cannot master the conventional and standard mouse and trackball can freely operate a computer by means of either the hold-gripping trackball or the pen-gripping mouse.
Of course, also a handicapped person can use the computer by a gripping means suited for the handicap which may be selected from versatile use conditions.

In accordance with the invention of claim 2, the device sliding along the axial line can be easily manufactured and assembled.

In accordance with the inventions of claims 3 and 4, the case hardly rotates so that the directionality of front, rear, right and left can be easily obtained.

In accordance with the invention of claim 5, the the difference is generated between the gripping forces of the fingers of the hold-gripping so that the fingers for the weak gripping are made free to be engaged in the operation of a keyboard.

In accordance with the invention of claim 6, when a natural stone is used as the ball, the design and the atmosphere of the device can be changed by combining a plurality of the balls of different natural stones in one device because a variety of natural stones having different colors and patterns can be selectively utilized.

In accordance with the invention of claim 7, the glass material is less expensive so that the less expensive input device can be provided.

In accordance with the invention of claim 8, the synthetic resin is less expensive so that the less expensive input device can be provided.

In accordance with the invention of claim 9, the ball rotation plane is perpendicular to the ball supporting means to be in contact with the ball in the pen-gripping manner.

In accordance with the invention of claim 10, the ball is rotatably accommodated in the cylindrical member to be hardly escaped so that the ball is easily imposed in the case.
The cleaning of the rotation and friction section and the replacement of the ball are easy after the ball section is removed from the case.

In accordance with the invention of claim 11, the cylindrical member can be easily molded and the detachment and the mounting of the ball are easy.

In accordance with the invention of claim 12, the ball supporting member can be made as one body.

In accordance with the inventions of claims 13 and 14, the detachment and the mounting of the ball are easy, and the cleaning of the rotation and friction section and the replacement of the ball are easy.

In accordance with the inventions of claims 15 and 16, the input device can be used as either the hold-gripping trackball or the pen-gripping mouse by the installation in the input device side without changing the installation of an operation system or a driver.

In accordance with the invention of claim 17, the input device can be used as either the hold-gripping trackball or the pen-gripping mouse by the installation in the input device side without changing the installation of an operation system or a driver after the posture of the hold-gripping or the pen-gripping is automatically detected to provide the optimum situation.

In accordance with the invention of claim 18, no changeover means is mounted in the input device side so that the number of the elements is reduced for easy assembly and the less expensive production is possible.

In accordance with the invention of claim 19, the projecting length at the upper end of the ball is larger and it is reduced with approach to the lower end. When the operating section of the switch is mounted on the end plane of a position indicating projection, the fingertip of the thumb moves more freely at the upper end thereof and moves with more difficulty at the bottom end thereof in the hold-gripping so that the operatability of the switch is elevated by reducing the projection length at the lower end.

In the invention of claim 20, since the ball supporting means and the optical ball rotation detecting means which move along the axial line is accommodated in the case end of the ball side, a switch cannot be built-in which is operated from outside. A mode selector and a right click switch can be positioned near to the ball by placing the above switches in the position indicating projection. A plurality of the switches can be collectively placed in the position indicating projection to facilitate the assembly and to achieve the downsizing.

In accordance with the invention of claim 21, since the mechanical snap operation is obtained, the operatability is well to easily elevate the skillfulness of the pressure adjustment.

In accordance with the invention of claim 22, the moving distance of the ball under pressing is considerably reduced to suppress the movement of the ball supporting means along the axial line, thereby decreasing the depletion of the sliding section.

In accordance with the invention of claim 23, the various operations of the GUI other than the pointer can be realized by increasing the number of and diversifying elements to be' controlled.

### BEST MODE FOR IMPLEMENTING INVENTION

Embodiments of the present invention will be described referring to annexed drawings.

### EXAMPLE 1

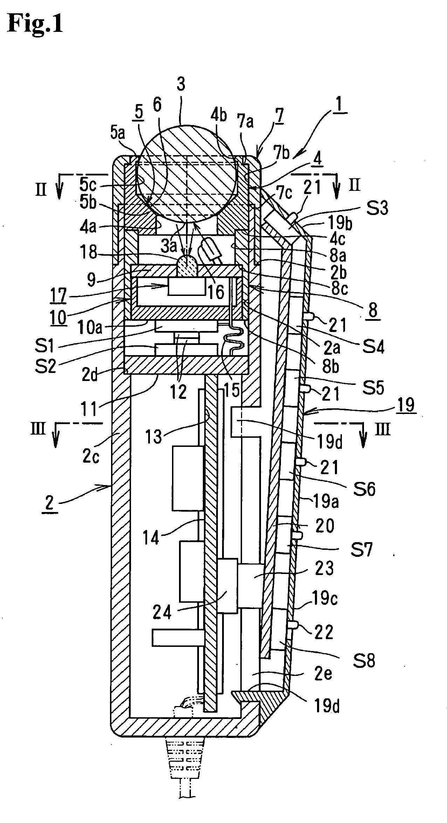

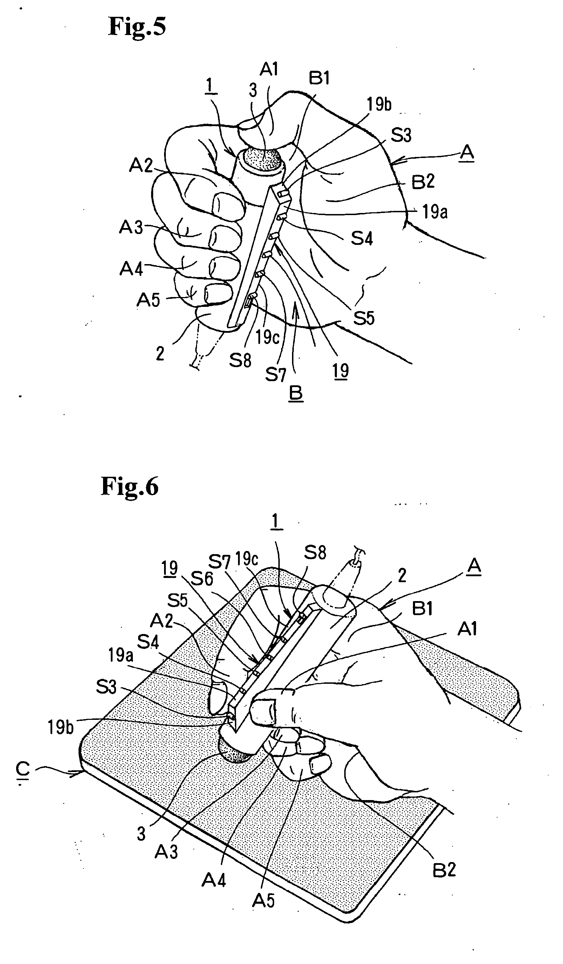

Figs 1 to 6 show one example of an input device for electronic calculator in accordance with the present invention. Fig. 1 is a left-side sectional view taken at a front center of the input device, Fig.2 is a horizontal sectional view taken along a line II-II of Fig.1, Fig.3 is a horizontal sectional view taken along a line III-III of Fig.1, Fig.4 is an action diagram of a snap switch in accordance with the present invention; Fig.5 is a perspective view showing the input device of the present invention used as a hold-gripping trackball, Fig.6 is a similar perspective view showing the input device of the present invention used as a pen-gripping mouse.

While, as shown in Figs.5 and 6, the input device of the present invention can be used not only as a hold-gripping trackball but also as a pen-gripping mouse, the input device will be described as a stick-type gripping device having a long and thin shape.

As shown in Figs. 1 to 6, a stick-type gripping input device (1) includes a bar-shaped case (2) which is gripped with a palm (A) together with a forefinger (A2), a middle finger (A3), an annular finger (A4) and a little finger (A5) other than a thumb (A1) when used as a hold-gripping trackball.

The circular columnar shaped bar case (2) includes a ball (3) having a pattern optically observable on its surface positioned at a longitudinal top end of the case, and a half or less of the ball is outward exposed.

The outer shape of the case (2) includes a polygonal column (not shown) as well as a circular column. Among the polygonal columns, a hexagonal column is easily gripped similar to the circular column. Further, a directional sensitivity can be more easily obtained in the hexagonal column by its handling when compared with the circular column because surface sections and angled sections are formed on its front surface, a back surface and' both side surfaces.

The top, bottom, right, left, front and rear in the following description are determined based on the situation of a hold-gripping trackball of Fig.1. The right side of Fig.1 is referred to as front, the left side is referred to as rear, the top side of Fig.1 is referred to as top, the bottom side of Fig. 1 is referred to as bottom, the right side of Fig.1 is referred to as forward, the left side is referred to as backward. The right and left are used when viewed in the front side direction from the right hand of Fig. 1

The ball (3) is rotated with the thumb (A1) not related with the gripping and its thenar eminence is not used when the case (2) of the stick-type gripping device (1) which is used as a hold-gripping trackball as shown in Fig.5 is gripped with the forefinger (A2), the middle finger (A3), the annular finger (A4) and the little finger (A5) other than a thumb (A1), together with the respective interdigital areas (B1) of a thenar (B).

The ball (3) is accommodated in a ball supporting means (4) which rotatably supports the ball in all directions with respect to the case (2), and can be moved in an axial direction with respect to the case (2).

A natural stone having on its surface an optical irregular pattern is used as the ball (3), as an example, and a spherical body made of a glass material having an optically non-uniform surface layer or synthetic resin having an irregular pattern in which at least one of concentration, hue and chroma saturation is different is also used.

The ball supporting means (4) has an outer cylindrical shape and is divided into plural sections along the axial direction.

The inner space of the cylinder constitutes a ball socket (5) in which the ball (3) is accommodated therein to rotatably support the ball (3) in all the directions.

The ball socket (5) includes inward projections (5a)(5b) having diameters smaller than the diameter of the ball (3) at the top and bottom ends of the inner space of the ball supporting means (4) such that the ball (3) does not disengage in the top and bottom direction.

Because of rotatably accommodating the spherical ball (3) made of the natural stone in the ball socket (5), the ball supporting means (4) is preferably made of a low frictional and anti-worn material such as carbon fiber-based material. A fluorine-based molded material having excellent low friction is more preferable though the anti-worn property slightly deteriorates.

The inner surface of the lower inward projection (5b) of the ball supporting means (4) is formed as a mortar-shaped tapered surface (6) in which the diameter is upward increased and the surface is concaved downward. Through the center thereof, an opening (4a) is formed for downward exposing the bottom surface (3a) on the axial line of the ball (3).
As described above, the tapered surface (6) is made of the low frictional and anti-worn material.

The tapered surface (6) may be provided with a plenty of trenches (not shown) in a radial direction. The trenches reduce the frictional resistance between the ball (3) and the tapered surface (6) and further removes oleaginous dirt attaching on the ball (3) surface.

The upper inward projection (5a) of the ball socket (5) is positioned slightly higher than the center of the ball (3) to make the diameter in contact with the ball smaller than the diameter of the ball (3).

The upper inward projection (5a) may be finely divided toward a circumference in a radical manner like a Japanese tea stirrer (not shown), thereby forming an elastic piece. In this case, the inconveniences due to the distortion of the ball such as errors of roundness and diameter of the ball can be absorbed.

The diameter in the inner space connecting the bottom of the lower inward projection (5b) with the bottom of the upper inward projection (5a) is made slightly larger than the diameter of the ball (3) so that the ball (3) smoothly rotates and the center of the ball (3) does not significantly deviate from the axial line.

When the inner space (5c) may be also provided with a plenty of vertical trenches along the axial line, the trenches reduce the frictional resistance between the ball (3) and the inner spaces (5c) and further removes oleaginous dirt attaching on the ball (3) surface.

A diameter-reduced step (4b) is formed at the top end of the cylindrical section forming the outer part of the ball supporting means (4). The diameter-reduced step (4b) is inserted in a top inner projection (7a) of a cap (7) detachably mounted at the top end of the case (2).

The engaging directions of both of the diameter-reduced step (4b) and the top inner projection (7a), may be made identical to form a tapered surface having a surface with the same slanting direction. Especially, when the top end of the ball supporting means (4) is finely divided like the Japanese tea stirrer, the elastic deformation of the inward projection of the Japanese tea stirrer can be easily performed if the top inner tapered surface of the cap (7) is upward oriented with respect to the tapered surface of the ball supporting means (4) to increase the gap.

Both of the diameter-reduced step (4b) and the top inner projection (7a) may not be finely divided like the Japanese tea stirrer. In place thereof, projections corresponding to the inward projection (7a) of the diameter-reduced step (4b) can be formed at the front ends of a suitable number of the elastic pieces.

The diameter of the inner space (7b) of the cap (7) and the diameter of the inner space (2a) at the top end of the case (2) are almost the same, which are slightly larger than the outer diameter of the cylindrical shape of the ball supporting means (4). The ball supporting means (4) loosely engaged with the inner spaces (7a)(2a) of the cap (7) and the case (2) is movable along the vertical axial direction.

The cap (7) includes a diameter-increased step (4b) at a lower part of the inner space (7b) which is detachably engaged with a diameter-reduced step (2b) formed at the top outer circumference of the case (2).

Any detachable inserting structure may be used as the above detachable insertion such as screw, pio-net and step insertion using elastic material. Any easily detachable structure in which no instrument is used when the ball (3) and the ball supporting means (4) are washed or replaced will do. The structure, of course, is not easily detached during the use.

When the ball (3) is accommodated in the ball socket (5), the ball (3) rotates along the axial direction and the direction perpendicular thereto without saccadic movement, and smoothly rotates in all directions.

A described above, the ball socket (5) is divided into plural sections, two sections in the example, along the axial direction. After the ball (3) is accommodated in the ball socket (5) it is assembled in the case (2).

The inward projection (5b) may be formed separately from the lower tapered surface (6) by modifying the inward projection (5b) to a doughnut-shaped seat plate which is positioned on the top of the cylindrical shape positioned below. In this case, the ball (3) can be accommodated in the ball socket (5) even if the ball socket (5) is not divided into plural sections along the axial direction.

When the top inner space projection (5a) is configured to be elastic, the ball (3) can be accommodated in the ball socket (5) without the division.

As described above, the lower part of the top diameter-reduced step (4b) on the outer periphery of the ball supporting means (4) is loosely engaged with the inner space (2a) of the top opening of the case (2) in the vertically movable manner along the axial line.

A diameter-increased step (2d) is formed on the wall around the inner space (2a) of the top opening of the case (2) which is slightly thinner than the lower outer wall (2c). The diameter- increased step (2d) having the same diameter that of the top inner space (2a) of the case (2) communicates with the inner space (2a), and a circular cylindrical member (8) mounted below the ball supporting means (4) is movably inserted along the axial direction in the inner space (2a).

The top end of the circular cylindrical member (8) is detachably engaged with a diameter-reduced step (4c) formed on the bottom of the ball supporting means (4).

The diameter of the lower inner space (8b) of the circular cylindrical member (8) is larger than that of the upper inner space (8a). A step (8c) is formed roughly in the center of the circular cylindrical member (8), and a disc-like electronic circuit board (9) for an optical sensor inserted upward is in contact with the step (8c).

A cylindrical board support (10) having a bottom which supports the electronic circuit board (9) by its top end is mounted in the bottom inner space (8b) of the circular cylindrical member (8) with the degree of engagement such that the board support (10) is not easily detached.

The bottom surface of a base plate of the board support (10) opposed to and is parallel with a top surface of a disc-like switch board (11) which is engaged with the top surface of the diameter-increased step (2d) of the case (2).

Double-decker push-button switches (S1)(S2) having different operating pressures are mounted on the top surface of the switch board (11) such that the respective push-buttons (12) are connected in series.

A pair of guide trenches (13)(13) are formed (refer to Fig.3) along the longitudinal direction at inner right and left ends of the case (2) on the bottom surface of the switch board (11) below the diameter-increased step (2d) of the case (2). A main electronic circuit board (14) mounting IC elements for interface with a computer is mounted to the guide trenches (13)(13). The main electronic circuit board (14) and the switch board (11) are electrically connected.

The switch board (11), the two push-button switches (S1)(S2) thereon, and the electronic circuit board (9) in the circular cylindrical member (8) are connected to the main electronic circuit board (14) through a flexible wire board (15).

The electronic circuit board (9) for the optical sensor mounted in the circular cylindrical member (8) includes a light-emitting diode (16) for irradiation on the bottom surface (3a) of the ball (3) on the axial line on its top surface, and a lens (18) providing an image of the pattern of the bottom surface (3a) of the ball (3) on a ball rotation detecting means (17).

The ball rotation detecting means (17) integrally with the ball supporting means (4) is movable along the axial line direction of the case (2).

The ball rotation detecting means (17) is an optical sensor which detects the movement of the pattern on the ball surface at the center of the axial line of the ball supporting means (4), thereby detecting the rotating direction and the rotating amount of the ball (3).

The ball rotation detecting means (17) is equivalent to an IC circuit element called as an optical encoder used in a conventional optical mouse.

The electronic circuit board (9) and the main electronic circuit board (14) are the same as the conventional optical mouse in their electric specifications. Difference exists in that an image provided by the lens (18) is conventionally a surface pattern on a desk or a mouse pad, and is the bottom surface pattern of the ball (3) in the present invention.

The right and left click switches are formed on the front right and left parts in the conventional optical mouse.

The switch corresponding to the left click in the present invention is one of the two push-button switches (S1)(S2) mounted on the switch board (11).

When the ball (3) is inward pressed along the axial line of the case (2) and the pressing force reaches a specified pressure, the ball supporting means (4), the ball rotation detecting means (17) and the ball (3) rapidly moving along the axial line allow the push-button switches (S1)(S2) acting as snap switches to operate in an integrated manner.
The push-button switches (S1)(S2) are configured as a ball movement detecting switch (S) which detects the ball (3) movement when the ball (3) is pressed.

Fig.4 is an actional diagram showing the snapping action of the push-button switches (S1)(S2) acting as the ball movement detecting switch (S). An operating pressure and a return pressure of the push-button switch (S1) are established to be 100 gram and 40 grams, respectively. An operating pressure and a return pressure of the push-button switch (S2) are established to be 250 gram and 130 grams, respectively. During the operation and during the comeback, a built-in snap spring generates the snapping action in the snap switch. At the time of the snapping action, the ball supporting means (4) and the ball rotation detecting means (17) rapidly moves along the axial line with the ball (3) in an integrated manner.

The switch (S1) and the switch (S2) formed by the two-tiered snap switches of which push-buttons are connected in series have different operating pressures from each other for operating the switches. Accordingly, when the operation force is applied to the both switches, the switch having the lower operating pressure always operates first and the other switch having the higher operating pressure operates after the operating pressure is increased, as shown in Fig.4.

Even when either of the operating pressures of the both switches is established to be low, the operation can be always selected by the operating pressure regardless of the positions.

As described above, the operating pressure of the upper push-button switch (S1) is established to be 100 gram which is smaller than 250 gram of the operating pressure of the lower push-button switch (S2), and the upper push-button switch (S1) is used for the left click in this Example.

The operating pressure of the lower push-button switch (S2) is higher than that of the upper push-button switch (S1) by the specified value (150 gram). Whether or not the lower push-button switch (S2) is operated can be selected by the strength of the pressing.

With the increase of the operating pressure of the lower push-button switch (S2), a length of time from the activation of the upper push-button switch (S1) to that of the lower push-button switch (S2) becomes longer.

With the increase of the operating pressure of the lower push-button switch (S2) and the increase of the difference between the operating pressure and a restoring pressure of the upper push-button switch (S1), a drag holding range (H1) becomes broader in which the dragging can be conducted while the upper push-button switch (S1) is operated.

The upper push-button switch (S1) is configured as the snap switch so that the drag holding range (H1) becomes wider when the upper push-button switch (S1) is operated.

With the increase of the operating pressure of the lower push-button switch (S2), a free rotation range (H2) only of the ball becomes broader.

Immediately before the activation of the push-button switches (S1)(S2) configured as the snap switches, a moving distance of the ball (3) along the axial line is extremely small. When the respective switches reach the operating pressures, the ball (3) rapidly moves by the snapping action of the switches so that the behavior of the ball (3) movement can be felt with the fingertip. The movement of the push-button switches (S 1)(S2) can be realized tactually.

In an ordinal snap switch, a clicking sound is generated during a snap operation to provide more feeling of operating the switch. Even when the device is hand-gripped in the blanket on a hospital bed for operation and no clicking sound is heard, the operation can be conducted without any problem because the feeling of the clicking is obtained at the fingertip.

The behavior of the ball (3) along the axial line corresponds to the pressure pressing the ball (3) toward the axial direction.

As mentioned above, both of the push-button switches (S1)(S2) are pressed along the axial line through the ball supporting means (4) and the circular cylindrical member (8) which are movable along the axial line by pressing the ball (3) downward along the axial line.

Thereby, the selective operation of both of the push-button switches (S1)(S2) becomes possible by adjusting the downward pressing of the ball (3) along the axial line.

The ball movement detecting switch (S) consisting of the push-button switches (S1)(S2) is replaced with an electronic switch which electronically detects the slight moving amount of the ball (the circuit diagram is not shown because of a well known window comparator circuit). This can be done by obtaining the operation characteristic as shown in Fig.4 in which a detected voltage detected by an pressure detecting sensor mounted at the button switches (S1)(S2) is compared with a lower standard voltage detecting pressure of 100 gram and a higher standard voltage detecting pressure of 250 gram with two window comparators while a history width of 60 gram is applied to a lower restoring pressure and a history width of 120 gram is applied to a higher restoring pressure.

The pseudo-snapping operation in the electronic circuit is not a mechanical one so that the operation cannot be checked by the sound generation or the sensuous vibration. However, it is used similar to the mechanical switch by supplementarily generating the pseudo-clicking sound and the pseudo-sound.

Since the ball (3) is rotatably supported toward all the directions in the ball socket (5) of the ball supporting means (4) in the state having a considerably smaller sliding resistance, the ball is easily rotated without activation of the push-button switch (S1) by delicately rotating the top exposed surface of the ball (3) toward its tangential direction to reduce the pressing force toward the axial direction.

The adjustment of the forces for rotating the ball (3) and for applying the pressure to the push-button switch (S1) for the snap operation is easily acquired by a quantity of training in which the behavior of the ball (3) is felt by fingertips.

When the force applied to the ball (3) increases in the axial direction, the force is applied to both of the push-button switchs (S1)(S2) through the ball supporting means (4) and the circular cylindrical member (8) movable along the axial direction. When the force component reaches 100 gram, the lower operating pressure, the push-button switch (S1) is snap-operated.

In this stage, the ball (3), the ball supporting means (4) and the circular cylindrical member (8) swiftly snap-move along the axial direction as a whole so that no positional change is generated between the bottom surface of the ball (3a) and the optical ball rotation detecting means (17). Accordingly, no element for malfunction is introduced into a signal controlling a pointer in the operational action for activating the switch.

Since the directions of the force of rotating the ball (3) and of the activating the switch are nearly perpendicular to each other, the adjustments of the forces and of the movements can be intentionally separated without the training and the skillfulness as described above.

The relation in which the ball (3) rotation and the switch activation are easily and intentionally separated is similarly applicable to the case where the operation is conducted with a thumb in the hold-gripping (refer to Fig.5) and to the case where the operation is conducted in the pen-gripping (refer to Fig.6) which will be described below.

The ease of the easy and intentional separation is connected with the generation of the force of gripping the case (2). In case of the hold-gripping where the thumb is used for operation, no or scarce influence is provided to the operating capability of both of rotating direction with a thumb (A1) and of the axial direction even how strong the case is gripped by the fingers other than the thumb. In case of the pen-gripping where the thumb, a forefinger and a middle finger are used for operation, no or scarce influence is provided to the operating capability of both of rotating direction with a thumb (A1) and of the axial direction even how strong the case is gripped by the fingers other than the thumb. Accordingly, both of the operation forces and the case gripping force are not required to be intentionally separated, and the hand may motion naturally in accordance with the purpose of the operation.

When the pressing force of the ball (3) along the axial direction passes the lower activation force (100 gram) and reaches the higher activation force (250 gram), the push-button switch (S2) is snap-activated (refer to Fig.4).

The push-button switch (S2) always operates with the push-button switch (S1), and an example of its role is to be used for a click-lock operation of a pointer.

When the ball (3) is operated with the finger pad of a thumb (A1) in the hold-gripping trackball of Fig.5, the amount of continuous rotation of the ball (3) is restricted. When the further rotating operation is required at the end of the rotation, the thumb (A1) maintaining the left click and the thumb (A1) rotating the ball (3) are the same so that the rotation of the ball (3) cannot be continued at the rotation end for continuing the drag operation because the thumb (A1) cannot be released while keeping the left clicking.

Then, when the long-distance drag of the pointer is required, the drag situation is locked in advance (click-lock). After the pointer is moved to the position of dropping, the dropping can be done by the left click at the position.

The right click is conducted with a push-button switch (S3) described later.

The position indicating projection (19) is formed on the side surface of the case (2) of the stick-type gripping input device (1) of the present invention, which projects toward the outer side surface (2d) in the longitudinal direction (axial direction) of the case (2) to tactually clarify the standard position of the direction around the case (2) by means of the hand feeling while the hold-gripping operation shown in Fig.5 and the pen-gripping operation shown in Fig.6 can be selected, the case has a thin and long cylindrical shape and the rotation of the ball (3) and the response of the pointer have the directionality.

As shown in Figs. 2 and 3, the width of the position indicating projection (19) around along the periphery of the case (2) is small and the position indicating projection (19) having a fish fin-shape projects toward the right front of the case (2).

The fin-shaped end surface (19a) of the position indicating projection (19) includes a downward slanted first plane (19b) extending from the ball side upper end of the case and a second plane (19c) downward extending from the lower end of the first plane with gradual decrease of an amount of the projection, both of the planes projecting outward from the case and extending along the longitudinal direction of the case.

The position indicating projection (19) formed separated from the cylindrical member of the case (2) is engaged, by its engaging projection (19d), with a slit aperture (2d) formed through the front bottom of the case (2), thereby being mounted on the front outer side surface of the case (2).

As shown in Figs.1 to 3, the position indicating projection (19) has top and bottom inward bent portions, and a long and thin switch mounting substrate (20) is positioned therein having a plenty of push-button switches (S3) to (S8).

The push-buttons (21) of the respective push-button switches (S3) to (S7) project from the end surface (19a) of the position indicating projection (19).

The lowest switch (S8) is a slide-type changeover switch, and its changeover knob (22) also projects from the end surface (19a) of the position indicating projection (19).

The switch mounting substrate (20) is electrically connected to the main electronic circuit board (14) through internal and external connectors (23)(24).

The function assignment of the switches (S3) to (S8) is as follows. The push-button switch (S3) formed on the top slanted surface (19b) is a mode-changeover switch which enlarges the functions of the push-button switches (S1)(S2) operated by the ball (3), the push-button switches (S4) highest on the slanted surface (19c) is a right click switch, and the following three push-button switches (S5) to (S7) are extension switches which are appropriately installed with software.

The extension switches relate to, for example, "copy", "paste" and "delete" of the shortcut function keys in application software installed in this order.

One of these push-button switches (S5) to (S7) are extension switches can be used as a switch which changes resolution (dots per inch, DPI) of the optical ball rotation detecting means as 200, 400, 800 and 1000. The resolution changeover switch may be added on the slanted surface (19c).

The above position indicating projection (19) resolves a structural problem that a switch communicated to an outside element is not mounted in the inner space of the case (2) near to the ball (3) at the top end because the circular cylindrical member (8) which moves the ball supporting means (4) and the optical ball rotation detecting means (17) along the axial direction in the inner space of the case (2).

In other words, the position indicating projection (19) which projects outward from the case (2) can accommodates the switches therein to make unnecessary the mounting of the switches in the case (2) externally operated, and further, the mode-changeover switch (S3) and the right click push-button switch (S4) can be mounted near the ball (3) and above the sliding section inside the case (2).

The operation of the respective switches can be made easier mainly with the thumb (A1) by collectively positioning the operation sections of a plurality of the switches on the end surface (19a) of the position indicating projection (19).

The detailed use of the extended GUI by means of the push-button switches (S1) to (S7) is described in the applicant's Japanese patent application No.2004-024975 so that the detailed description is omitted in this Description.

The reactive direction of the pointer is reversed in the right and left direction between the hold-gripping operation shown in Fig.5 and the pen-gripping operation shown in Fig.6. The lowest changeover switch (S8) on the slanted surface (19c) switches for correct response.

Fig.5 shows the gripping of the case (2) when the stick-type gripping input device (1) is used as the hold-gripping trackball. The changeover knob (22) of the changeover switch (S8) exists above.

The stick-type gripping input device (1) is gripped such that the ball (3) is upward oriented, the position indicating projection (19) is oriented to the nearside facing to a thenar eminence, and the both sides of the case (2) are hold-gripped with a forefinger (A2), a middle finger (A3), an annular finger (A4) and a little finger (A5) other than a thumb and the respective interdigital areas of a thenar (B).

The thumb (A1) of which a finger pad is in contact with top of the ball (3) moves in all directions to slide the ball (3) surface, thereby rotating the ball (3).
The thumb (A1) is lowered as it is when the ball (3) is pressed along the axial direction.

Since the thumb (A1) is free at its thenar (B2) portion without any restraint, both of the rotation of the ball (3) and the pressing of the ball (3) can be controlled with higher response without mutual influence.

The push-button switch (S3) right below the ball (3) in its front side which is mounted on the slanted surface forming the highest end of the position indicating projection (19) is pressed with the thumb to perform the mode changeover which extends the functions of the respective push-button switches (S1)(S2)(S4).

The push-button switch (S4) for right click which is mounted on the top end of the slanted surface (19c) of the near side of the position indicating projection (19) is pressed with the thumb in the desired stage of the GUI.
In the ordinary GUI, the right and left clicks are not concurrently generated so that the no disadvantage arises by the pressing of the same thumb (A1).

The other push-button switches (S5)(S6)(S7) mounted on the slanted surface (19d) of the near side of the position indicating projection (19) are pressed with the thumb (A1), and the changeover switch (S8) at the bottom end of the slanted surface (19d) is also pressed with the thumb (A1).

In this manner, when the stick-type input device (1) is used as the hold-gripped manner, the operation of moving the pointer and all the operations of switching are conducted with only the thumb (A1).

Accordingly, no burden for switching operation is applied to the respective fingers gripping the case (2). The strength of gripping exerts no influence on the force adjustment of the thumb (al) and the response characteristics.

The necessity of higher learning ability and training in relation with the operation of the pointer is reduced by the separating function of the adjustment of the gripping. When the exercise ability of the thumb (A1) is maintained, a handicapped person can use a computer similar to a normal person provided that one of the other fingers works well.

Moreover, the exercise ability of the thumb (A1) used in the pointer operation is advantageous not only for the dominant hand in which the dominance has been acquired by training and skillfulness. Since the exercise ability is mainly based on the fundamental ability of the thumb itself so that similar exercise ability can be exerted on the thumb of the non-dominant hand, even a person having disability in his or her dominant hand can utilize a computer similarly to a normal person.

The right and left movement of the thumb (A1) is interlocked with the right and left movement of the pointer which is observed by an operator. The right hand thumb which is usually the dominant hand thumb (A1) and the left hand thumb which is the non-dominant hand thumb (A1) in the hold-gripping are recognized to be in the same direction as the moving direction of the pointer and to be interlocked therewith. Accordingly, no disadvantage is generated on the control in connection with the shifting of a hand to the other which grips the case.

Fig.6 shows the gripping of the case (2) when the input device (1) is used as the pen-gripping mouse. The changeover knob (22) of the changeover switch (S8) is positioned below in Fig.1.

The stick-type gripping input device (1) is pen-gripped such that the ball (3) is downward oriented, the position indicating projection (19) is upward oriented, and the top end of the position indicating projection (19) is sandwiched between the thumb (A1) and the forefinger (A2), and the middle finger (A3) is attached blow the above fingers.

In the pen-gripping state, the ball (3) is slightly pressed on the top surface of a mouse pad (C) having a high antifrictional film on its surface to rotate the ball (3) while suitable pen pressure is applied as if letters were written.

The rotating force of the ball (3) is given by sliding the ball (3) on the surface of the mouse pad (C), and the pressing force along the axial direction is given in a manner pen pressure is applied on a writing instrument when letter are written.

Such an exercise action is a sufficiently trained writing action for an aged person so that no difficulty exists.

In this pen-gripping state, the thenar (B2) portion at the bottom of the thumb (A1) is free and the stick-type gripping input device (1) is clip-gripped with the three fingers or the thumb (A1), the forefinger (A2) and the middle finger (A3).

Since, accordingly, the case (2) can be nip-gripped with the forefinger (A2) and the middle finger (A3) even when the thumb (A1) must be detached from the case (2), the push-button switches (S4) to (S7) on the slanted surface (19c) of the position indicating projection (19) can be easily operated while the thumb (A1) is made free.

The push-button switch (S3) on the slanted surface (19b) at the top end of the position indicating projection (19) is operated with the fingertip of the forefinger (A1) released from the case (2) while the case (2) is nip-gripped with the thumb (A1) and the middle finger (A3).

The nip-gripping of the writing instrument with the two fingers by releasing either the thumb or the middle finger in this pen-gripping state accompanies no difficulty, thereby requiring neither training nor skillfulness.

Accordingly, also in the pen-gripping mouse, the rotation of the ball (3) and the pressing of the switches can be easily operated by anyone regardless of skillfulness.

In this case of the pen-gripping, the well-trained or skilled writing ability is utilized so that the difference on the dominant hand appears remarkably.

### EXAMPLE 2

While the stick-type gripping input device (1) of the present invention can be used not only as a hold-gripping trackball shown in Fig.5 but also as a pen-gripping mouse shown in Fig.6, the directions of the ball (3) rotation and of the response of the pointer are reversed in the right and left direction, and this inconvenience can be overcome by mounting a changeover means therefore.

In the Example, a manual changeover switch (S8) is mounted, as the above changeover means, at the bottom of the slanted surface (19b) for the correct response in the right and left direction.

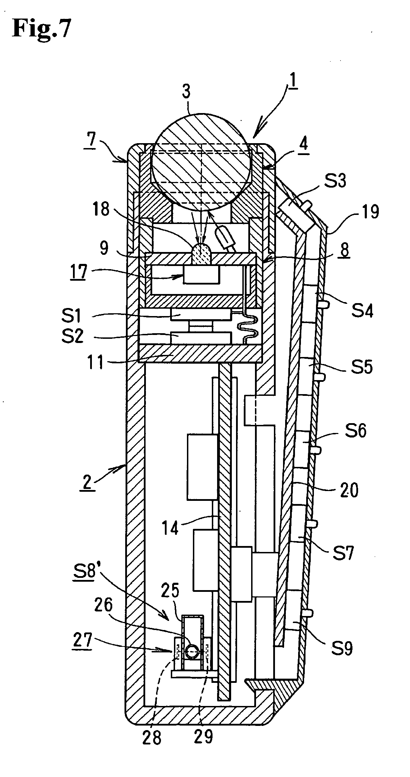

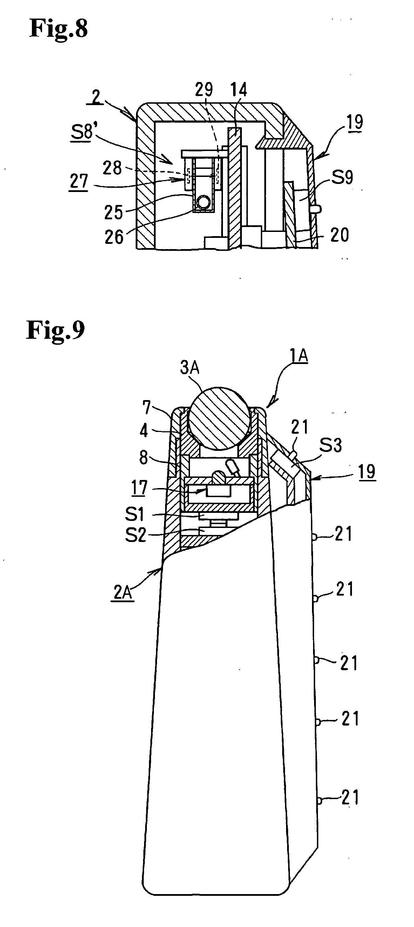

Figs.7 and 8 show another embodiment of the changeover means in which the manual changeover switch (S8) is automatically switched in accordance with a gripping manner of the case (2).

Fig. 7 is a sectional view similar to Fig.1. Fig.8 is a central sectional view of a pertinent portion similar to Fig.7 showing a pertinent modified portion upon the reverse of the case (2) for the pen-gripping in the vertical direction.

The same numeral as that of Fig.1 is denoted to an element the same as that of Fig.1 as a typical numeral, and the description thereof is omitted (similarly hereinafter).

An automatic changeover switch (S8') includes a circular cylindrical transparent case (25) which fixed on the bottom end of the main electronic circuit board (14) in which the axial line of the case (2) is coincident with the axial line of the case (25). An opaque spherical body (26) which is movable along the vertical axial line is inserted in the transparent case (25).

A photoelectric coupler (27) is mounted such that the transparent case (25) is sandwiched between the surfaces of the coupler at the bottom part of the side portions thereof. A photoelectric circuit consisting of a light-emitting element (28) and a light-accepting element (29) of the photoelectric couplers (27) is turned off by the opaque spherical body (26) when the ball (3) is upward oriented in the posture of the case (2).

The transparent case (25) extends upward beyond the position where the opaque spherical body (26) blocks the photoelectric coupler (27). When the case (2) is reversed, the opaque spherical body (26) drops by its own weight in the downward direction in Fig.8 to turn on the photoelectric circuit□of the photoelectric coupler (27).

The opaque spherical body (26) is made hollow to comparatively reduce the weight, and its diameter is slightly smaller than that of the inner diameter of the transparent case (25) so that the moving velocity of the opaque spherical body (26) in the transparent case (25) is made nearly constant.

Thereby, no sound is generated when the opaque spherical body (26) is hit on the transparent case (25) even if the case (2) is abruptly reversed or vibrated along the vertical direction.

In this manner, the automatic changeover between the hold-gripping operation where the ball (3) is oriented upward and the pen-gripping operation where the ball (3) is oriented downward can be performed by the changeover of the corresponding relation between the rotational right and left direction of the ball (3) and the responsive right and left direction of the pointer.

The changeover switch (S8) of Example 1 and the changeover switch (S8') of Example 2 are switches which reverse the responsive direction of the pointer. The on-off states of both of the switches are transmitted to the optical ball rotation detecting means (17) to changeover the right and left signals for detecting a moving amount.

Accordingly, the optical ball rotation detecting means (17) substantially includes the changeover means for reflecting the rotating direction of the ball to be detected.

The respective changeover means are accommodated in the case (2) as the manual changeover switch (S8) in Example 1 and as the automatic changeover switch (S8') automatically activated in accordance with the posture of the case (2).

On the other hand, the pointer of the GUI controls its operation in an operation system so that the operation system can be controlled to easily respond to the signal transmitted from the interface of the pointer in the right and left reversed manner.

In this operation system, the changeover means for reversing the responsive direction of the pointer can be realized by a software program which configures as either an operation system or a driver incorporated into the operation system.

While the manual changeover switch (S8) in Example 1 is shown as the sliding changeover switch, it may be configured as a push-button switch similar to the other push-button switches (S3) to (S7) to be used as a toggle-mode switch after the on-off is converted into the toggle mode.

When the responsive direction changeover switch of the pointer is separately built-in as in this Example, an additional push-button switch (S8) is mounted at the lowest changeover switch (S8) of the position indicating projection (19) in the preceding Example and is used as a changeover switch for resolution.

### Example 3

Fig.9 shows another Example in which the shape of the case (2) is a truncated circular cone having a tapered-off top end of the case (2).

When the case (2) near the ball (3A) is thinned, the diameter of the ball (3A) is slightly smaller than that of Example 1 so that the rotating operation of the ball (3A) can be delicately conducted because the delicate pen-operation is possible on a smaller ball rather than a large ball in the pen-gripping operation.

Since the size of the case (2A) is larger in the bottom, when the case (2A) is gripped with a forefinger (A2), a middle finger (A3), an annular finger (A4), a little finger (A5) other than a thumb (A1) and the respective interdigital areas (B1) of a thenar (B) in the hold-gripping, the gripping with the forefinger (A2) is loosened by itself such that the forefinger gradually becomes uninvolved to the gripping because the stronger gripping can be attained in the little finger (A5) side rather than the forefinger (A2) side.

Thereby, when the stick-type gripping input device (1) of the present invention is operated as the hold-gripping, the forefinger can freely extend while the stick-type gripping input device (1) is firmly gripped.

The keyboard can be operated with the forefinger (A2) while the stick-type gripping input device (1) of the present invention is gripped.

While this is possible in Example 1, the keyboard operation can be more easily conducted in the tapered-off top end of the case (2A) with the liberated forefinger (2A) because the respective interdigital areas (B1) at the bottom of the forefinger are looseneda□

### Example 4

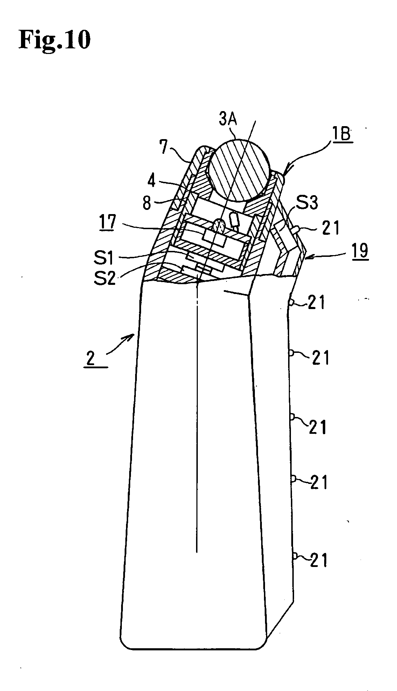

Fig. 10 shows an example of a neck-bent type case (2B) which is prepared by slightly inclining the tapered-off top end of the truncated circular cone case (2A) with respect to the axial line at the bottom end by a smaller angle.

When a writing instrument is pen-gripped for writing operation, the writing instrument is in contact with a writing plane with the slight slanting toward the writer.

The ball (3) of the present invention compares the pattern detecting section of the optical ball rotation detecting means (17) with the moving point in the symmetrical manner so that when the moving point departs from the symmetrical point along the axial line, the linearity between the moving amount and the detected amount cannot be obtained.

In order to make the strict correspondence between the rotating amount of the ball (3) in all the directions and the moving amount of the pointer on a display, the axial line of the case (2) must be perpendicular to the mouse pad surface (C) such that the point right above the ball is defined as the moving point in the pen-gripping.

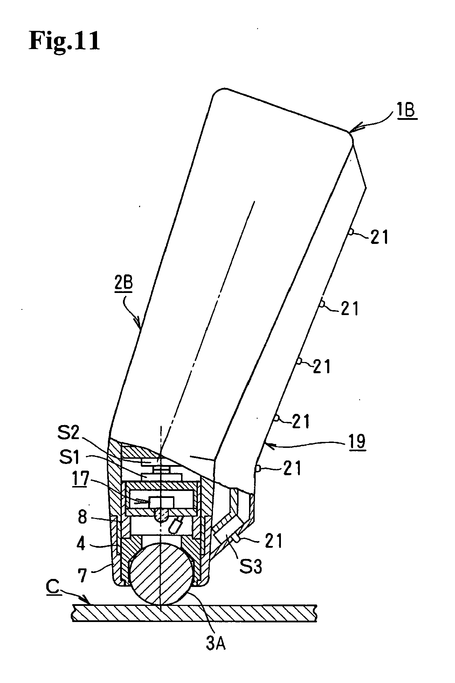

The axial lines of the ball (3) and the optical ball rotation detecting means (17) can be perpendicular to the mouse pad surface (C) as shown in Fig.11 by using the neck-bent type case (2B) as shown in Fig.10 even in the pen-gripping in which the bottom of the case (2B) is slanted such that the point right above the ball is defined as the moving point in the pen-gripping.

In this Example, the axial line of the ball (3) inclines in the forward direction in the hold-gripping operation so that the thumb (A1) rotates the top of the ball (3) without difficulty.

In other words, the ball (3) can be rotated without bending of the last joint of the thumb (A1).
As described above, the axial lines of the ball (3) and the optical ball rotation detecting means (17) can be perpendicular to the mouse pad surface (C) even if the case (2) is slanted in the rearward direction in the pen-gripping operation.

The front and rear relation in connection with the position of the position indicating projection (19) in the manner of the pen-gripping in this Example is reversed in connection with Example 1.

Various modifications or alterations can be made on the above Examples without departing from the scope of the present invention.

### BRIEF DESCRIPTION OF DRAWINGS

Fig.1 is a left-side sectional view taken at a front center showing a stick-type gripping input device in accordance with an embodiment of the present invention.
Fig.2 is a horizontal sectional view taken along a line II-II of Fig.1.
Fig.3 is a horizontal sectional view taken along a line III-III of Fig.1.
Fig.4 is an actional diagram of a snap switch in accordance with the present invention.
Fig.5 is a perspective view showing the input device of the present invention used as a hold-gripping trackball.
Fig.6 is a similar perspective view showing the input device of the present invention used as a pen-gripping mouse.
Fig.7 is a left-side sectional view taken at a front center similar to Fig.1 showing an embodiment of an automatic changeover switch which changeovers the responsive direction of a pointer depending on a posture of the stick-type gripping input device of the present invention.
Fig.8 is a pertinent part central longitudinal sectional view in which a pertinent part of Fig.7 is upside-down showing the operation of the automatic changeover switch with another posture different from that of Fi.7
Fig.9 is a left-side sectional view taken at a front center similar to Fig.1 showing an another embodiment of a case of the stick-type gripping input device of the present invention.
Fig. 10 is a left-side sectional view taken at a front center showing another embodiment of a case in which a tapered-off top end of the truncated circular cone-shaped case is slanted with a slight angle with respect to an axial line at a bottom end.
Fig.11 is a left-side sectional view taken at a front center showing a situation of use of the case of Fig.10 in pen-gripping.

### DISCRIPTION OF SYMBOLS

(1) stick-type gripping input device
(2)(2A) case
(3)(3A) ball
(4a) opening
(4b) diameter-reduced step
(5) ball socket
(5a)(5b) inward projection
(5c) inner space
(6) tapered surface
(7) cap
(7a) inward projection
(7b) inner space
(7c) diameter-increased step
(8) circular cylindrical member
(8a)(8b) inner space
(8c) step
(9) electronic circuit board
(10) cylindrical board support
(10a) bottom plate
(11) switch board
(12) push-button
(13) guide trench
(14) main electronic circuit board
(15) flexible wire board
(16) light-emitting diode
(17) ball rotation detecting means
(18) lens
(19) position indicating projection
(19a) end plate
(19b)(19c) slanted surface
(20) switch mounting substrate
(21) push-button
(22) changeover knob
(23) (24) connector
(25) transparent case
(26) opaque spherical body
(27) photoelectric coupler
(28) light-emitting element
(29) light-accepting element
(S1) to (S8) push-button switch
(S8') automatic changeover switch
(A) hand (palm)
(A1) thumb
(A2) forefinger
(A3) middle finger
(A4) annular finger
(A5) little finger
**(B)** thenar
(B1) interdigital area
(B2) thenar portion
(C) mouse pad

## Claims

1. An input device for electronic computer comprising:
a bar-shaped case which can be gripped by using fingers except a thumb;
a ball, which is positioned at a longitudinal end of the case and a half or less of which is outward exposed, having on its surface a pattern optically observable and rotated by the thumb when the case is gripped by the fingers except the thumb;
a ball supporting means which rotatably supports the ball in all directions with respect to the case, and can be moved in an axial direction with respect to the case;
an optical ball rotation detecting means which moves integrally with the ball supporting means in the axial direction of the case, and detects a movement of the pattern on the ball surface at an axial middle point of the ball supporting means, thereby detecting a rotating direction and a rotating amount of the ball;
a position indicating projection which projects toward a side of the case in a longitudinal direction to clarify a base position of an axial rotation direction of the case; and
a ball movement detecting switch which is operated by an axial direction movement of the ball, the ball supporting means and the optical ball rotation detecting means upon pressing of the ball toward the inner axial direction of the case.

2. The input device for electronic computer as claimed in claim 1, wherein the bar-shaped case is circular columnar.

3. The input device for electronic computer as claimed in claim 1, wherein the bar-shaped case is polygonal columnar.

4. The input device for electronic computer as claimed in claim 3, wherein the polygonal column is hexagonal column.

5. The input device for electronic computer as claimed in any one of claims 1 to 4, wherein the bar-shaped case is a pyramidal structure having a different thickness at both ends along a longitudinal direction.

6. The input device for electronic computer as claimed in any one of claims 1 to 5, wherein the ball is a natural stone having an optically irregular pattern on its surface.

7. The input device for electronic computer as claimed in any one of claims 1 to 5, wherein the ball is a glass material having an optically non-uniform surface layer.

8. The input device for electronic computer as claimed in any one of claims 1 to 5, wherein the ball is synthetic resin having a surface layer in which at least one of concentration, hue and chroma saturation is different.

9. The input device for electronic computer as claimed in any one of claims 1 to 8, wherein the ball is mounted at an end along a longitudinal direction such that an axial line of the case in a longitudinal direction and an axial line of the ball supporting means are slightly incongruous.

10. The input device for electronic computer as claimed in any one of claims 1 to 9, wherein the ball supporting means accommodates the ball in a cylindrical member having an inner diameter slightly larger than a diameter of the ball, and a lower friction projection for preventing a movement of the ball along an axial direction is formed at a vicinity of both side openings sandwiching the ball along the axial direction.

11. The input device for electronic computer as claimed in claim 10, wherein both of or at least one end of the lower friction projections is separated from the cylindrical member accommodating the ball.

12. The input device for electronic computer as claimed in claim 10, wherein both ends of the lower friction projection are integrally united with the cylindrical member accommodating the ball.

13. The input device for electronic computer as claimed in claim 10, wherein the lower friction projection is integrally united with the cylindrical member accommodating the ball by making elastic the projection at the end where the ball surface is exposed..

14. The input device for electronic computer as claimed in any one of claims 1 to 13, wherein the ball supporting means is divided to a plurality of sections along a radial direction with respect to an axial line.

15. The input device for electronic computer as claimed in any one of claims 1 to 14, wherein the ball rotation detecting means includes a changeover means for reversing a rotating direction of the ball to be detected.

16. The input device for electronic computer as claimed in claim 15, wherein the changeover means is a changeover switch equipped in the case.

17. The input device for electronic computer as claimed in claim 15, wherein the changeover means is an automatic changeover switch which automatically operates depending on configuration of the switch.

18. The input device for electronic computer as claimed in claim 15, wherein the changeover means is a software program which is either an operation system or a driver built-in in the operation system.

19. The input device for electronic computer as claimed in any one of claims 1 to 18, wherein the position indicating projection forms a fin-like shape which includes a downward slanted first plane extending from the ball side upper end of the case and a second plane downward extending from the lower end of the first plane with gradual decrease of an amount of the projection, both of the planes projecting outward from the case and extending along the longitudinal direction of the case.

20. The input device for electronic computer as claimed in any one of claims 1 to 19, wherein the position indicating projection includes one or more built-in switches.

21. The input device for electronic computer as claimed in any one of claims 1 to 20, wherein the ball movement detecting switch is a mechanical contact opening and closing snap switch in which its operational position is adjusted by pressure of a spring.

22. The input device for electronic computer as claimed in any one of claims 1 to 20, wherein the ball movement detecting switch is an electronic switch which electronically detects the operational position of the switch by means of a pressure detecting sensor.

23. The input device for electronic computer as claimed in any one of claims 1 to 20, wherein the ball movement detecting switch is a plurality of switches each operating in plural moving amounts.
